Europäisches Patentamt

European Patent Office

Office européen des brevets

(11) Veröffentlichungsnummer: **0 378 143**
**A2**

(12) **EUROPÄISCHE PATENTANMELDUNG**

(21) Anmeldenummer: **90100293.1**

(22) Anmeldetag: **08.01.90**

(51) Int. Cl.⁵: **G01B 5/00**

(30) Priorität: **10.01.89 CS 168/89**

(43) Veröffentlichungstag der Anmeldung:
**18.07.90 Patentblatt 90/29**

(84) Benannte Vertragsstaaten:
**CH DE FR GB LI SE**

(71) Anmelder: **PRVNI BRNENSKA STROJIRNA KONCERNOVY PODNIK**
**Olomoucka 7/9**
**Brno(CS)**

(72) Erfinder: **Fiala, Stanislav, Dipl.-Ing.**
**Babickova 40**
**Brno(CS)**
Erfinder: **Bocek, Vlastislav**
**Uvoz 116**
**Brno(CS)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **Magnetische Spannvorrichtung zur Positionierung eines Geräts.**

(57) Gegenstand der Erfindung ist eine magnetische Spannvorrichtung zur Positionierung einer Meßeinrichtung oder anderer Geräte gegenüber einer Bezugsfläche (100) mittels Stützstreben (60) und eines Haftmagneten (4), der an der Stirnseite eines unteren Rohrs (22) gelenkig befestigt und über eine Zugfeder (5) mit einem oberen Rohr (21) verbunden ist. Beide Rohre sind in einem Tubus (2) mit Hilfe einer Stellschraube (51) und eines Kopfes (52) längsbewegbar geführt. Einen Bestandteil der Vorrichtung bildet eine Basis (10) mit längsverstellbaren Stützstreben (6) und einem Tragkörper (1), an dem das Meßgerät oder eines seiner Teile montiert wird.

FIG.1

## Magnetische Spannvorrichtung zur Positionierung eines Geräts

Die Erfindung betrifft eine magnetische Spannvorrichtung zur Positionierung eines Geräts, insbesondere eines Meßgeräts gegenüber einer Bezugsfläche.

In der Praxis ist es häufig erforderlich, ein bestimmtes Bauteil in einer vorgegebenen Position in bezug auf eine gegebene Bezugsebene und/oder die Koordinatenachsen einer Meß- oder Werkzeugmaschine genau einzustellen. Dies gilt beispielsweise bei der Bestimmung der Achsenlage von Zylinderstopfbuchsenflächen eines geteilten Turbinen- oder Kompressorgehäuses gegenüber der Trennebene ihrer Gehäuseteile. Zu diesem Zweck wird bisher eine geeignete Meßeinrichtung an die jeweilige Trennfläche mit Hilfe von Haftmagneten befestigt. Die erforderliche Feineinstellung der Position der Meßeinrichtung muß jedoch im voraus durch ein System von Justierelementen vorgenommen werden, von denen einige an dem Gehäuseteil festgelegt werden müssen, der die jeweilige Trennebene bestimmt. Diese schwierige Einstellung kann bei vertikal verlaufender Trennebene nicht durchgeführt werden. Eine solche Ausrichtung der Gehäuse-bzw. Körperteile ist jedoch im Hinblick auf die nachfolgenden Bearbeitungsvorgänge, wie die Herstellung von zylindrischen Aussparungen, wünschenswert, die mit der Achse der vorgeformten Stopfbuchsenflächen genau konzentrisch sein sollen. Bei der Einstellung einer genauen Position während der ersten und bei der Einspannung während einer folgenden Phase wirkt sich das Gewicht der Meßeinrichtung nachteilig aus.

Aufgabe der Erfindung ist es, eine magnetische Spannvorrichtung zu schaffen, die eine eindeutige und genaue Positionierung eines Geräts, insbesondere eines Meßgeräts, für jede Lage der Bezugsebene gewährleistet und dessen einfachere Feineinstellung ermöglicht.

Diese Aufgabe wird erfindungsgemäß durch die Merkmale des Patentanspruchs 1 gelöst.

Die erfindungsgemäße Positionier- oder Spannvorrichtung enthält einen Haltemagnet und mindestens ein mechanisches Stellelement, zum Beispiel eine Schraube. Der Träger des Haltemagnetes enthält zwei gegeneinander axial verschiebbare Rohre, die an den entfernten Enden durch je eine Endplatte abgeschlossen sind. Diese Rohre sind in einem Tragkörper axial verschiebbar gelagert und durch eine Zugfeder miteinander verbunden. An der Endplatte des oberen Rohrs ist ein Schraubenmechanismus angeordnet, dessen Stellglied über die Zugfeder mit einer gelenkigen Halterung des Haftmagneten verbunden ist. Im Haltemagnet ist senkrecht zu seiner Frontfläche eine Löseschraube angeordnet.

Zweckmäßig sind die beiden Rohre gleichachsig in einem Tubus gelagert, welcher senkrecht zur Basis des Tragkörpers ausgerichtet und mit diesem fest verbunden ist.

Die magnetische Spanneinrichtung gemäß der Erfindung ermöglicht, auch schwerere Meßvorrichtungen an einer ebenen, magnetisch aktiven Bezugsfläche zu positionieren und Feineinstellungen ihrer Lage vorzunehmen. Die Arretierung auf der Bezugsfläche ist eindeutig und kräftemäßig ausreichend, und zwar ohne zusätzliche Justierelemente. Die Befestigung und Justierung des Meßgeräts kann in beliebiger Lage der Bezugsfläche erfolgen, was sich besonders bei der Ausrichtung und Einstellung von Körperteilen schwerer rotierender Maschinen vorteilhaft auswirkt, z. B. bei Gehäusen und Körpern von leistungsfähigen Schaufelturbinen und Kompressoren.

Weitere Besonderheiten und Vorteile der Erfindung sind bei dem in der Zeichnung dargestellten Ausführungsbeispiel verwirklicht, das im folgenden ausführlicher beschrieben wird. Es zeigen:

Fig. 1 einen schematischen Axialschnitt einer Spanneinrichtung im entspannten Zustand;

Fig. 2 die Spanneinrichtung nach Fig. 1 im gespannten Zustand.

Die dargestellte Spanneinrichtung enthält einen Tragkörper 1 mit einer plattenförmigen Basis 10. Im Tragkörper 1 wird ein Arm 7 einer nicht dargestellten Meßvorrichtung mittels einer Spannschraube 11 und einer Klemmplatte 12 befestigt. Mit der Basis 10 ist ein Tubus 2 fest verbunden, in dem ein oberes Rohr 21 mit einer oberen Endplatte 212 angeordnet ist. An der Innenseite der Endplatte 212 ist eine obere Aufhängung 210 angeordnet und an der Außenseite befindet sich eine Kammer 213 als Drehsitz für den Kopf 510 einer Spannschraube 51. Im Tubus 2 ist ferner ein gleichartiges unteres Rohr 22 mit einer Bodenplatte 222 gleichachsig angeordnet, an deren Innenseite eine untere Aufhängung 220 vorgesehen ist. Die Außenseite der Bodenplatte 220 ist mit einer Brücke 30 eines Schwenkmechanismus 3 verbunden, zu dem eine untere Brücke 31 gehört, die mit der oberen Brücke 30 über Querbolzen 32 gelenkig verbunden ist. An der unteren Brücke 31 ist ein Haltemagnet 4 mit ebener Funktionsfrontfläche 40 befestigt. Im Haltemagnet 4 ist eine zentrale Stellschraube 41 eingeschraubt, deren Kopf 42 von den offenen Seiten der Schwenkbrücke 3 zugänglich ist. Die obere und untere Aufhängung 210 und 220 sind durch eine Zugfeder 5 miteinander verbunden, die von den beiden Rohren 21 und 22 umgeben ist. Die Spannschraube 51 greift in eine Gewindebohrung in einer Aufhängung 24 des Tubus 2 ein und trägt am freien Ende einen hohlen Betätigungsdrehknopf 52, dessen Innendurchmesser größer als der Außendurchmesser des Tubus 2 ist.

An der Basis 10 ist an jeder Seite des Tubus 2 ein Stellmechanismus 6 angebracht, der ein axial verschiebbares Stützglied 60 aufweist. Der Stellmechanismus 6 kann mit Vorteil aus einer bekannten Mikrometerschraube bestehen, die an ihrem Berührungsende eine Stahlkugel trägt.

Die Arbeitsweise der beschriebenen magnetischen Spanneinrichtung ist folgende:

Vor der Einspannung werden die Längen der Abstützelemente 60 auf einen Wert eingestellt, der dem gewünschten Abstand der Basis 10 von der für die Messung maßgebenden Funktionsfläche 100 entspricht. Von der Zugfeder 5 werden die beiden Rohre 21 und 22 zusammengezogen, so daß sich ihre Frontseiten 211 und 221 berühren. Der Haltemagnet 4 befindet sich in seiner oberen Stellung, wobei zwischen der oberen Brücke 30 des Schwenkmechanismus 3 und der Basis 10 keine Lücke vorliegt. Die Stellschraube 41 ist mittels ihres Kopfes 42 herausgeschraubt, so daß ihre Stirn nicht über die untere Frontfläche 40 des Haltemagnets 4 hinausragt.

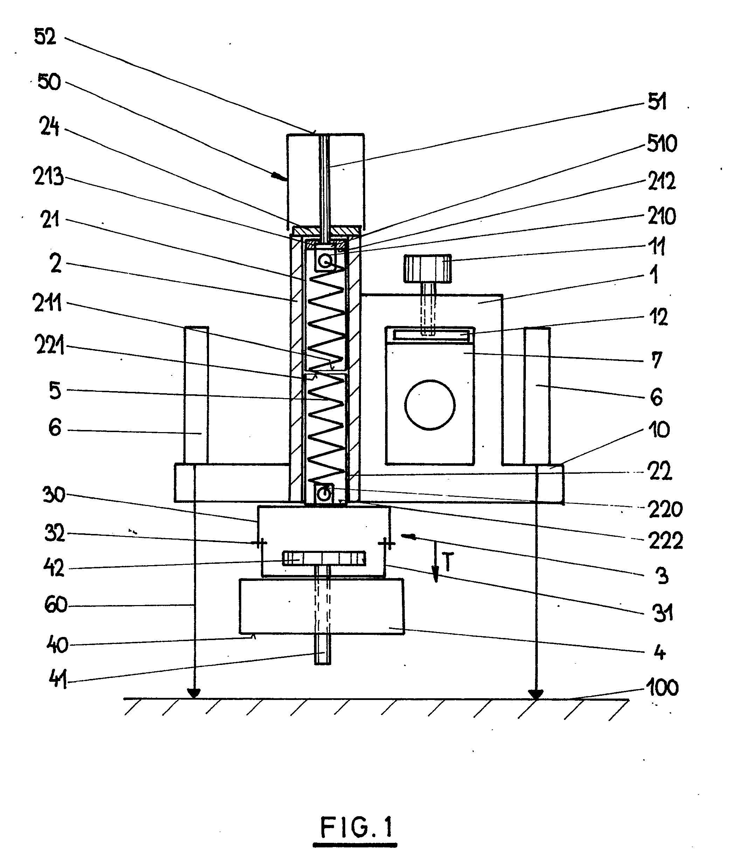

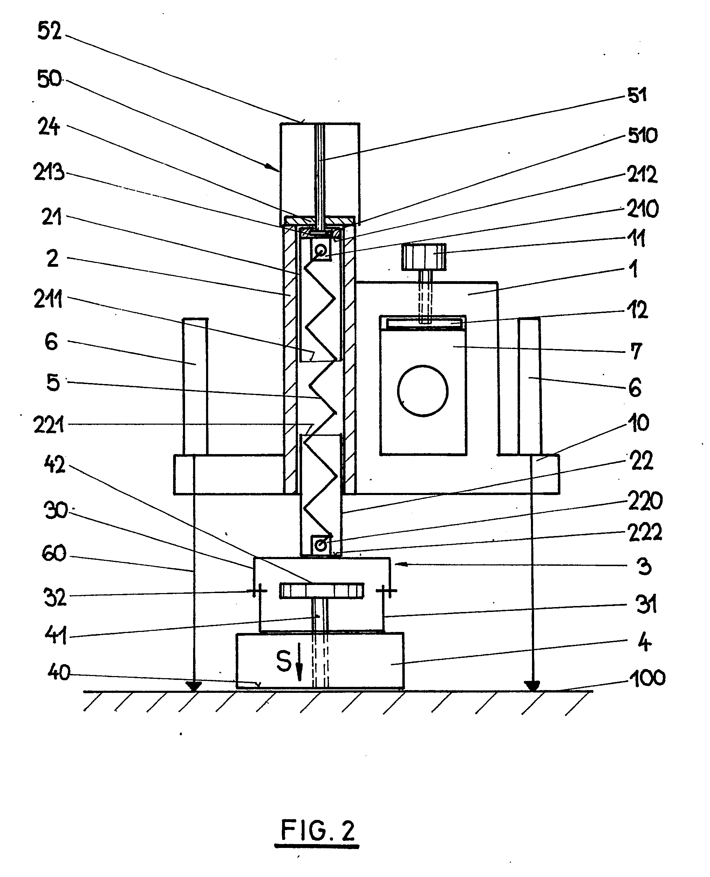

Die mit der magnetischen Spanneinrichtung nach der Erfindung ausgestattete Meßvorrichtung wird an die Funktionsfläche 100 in die durch die Länge der Abstützelemente 60 bestimmte Lage angelegt. Falls es notwendig ist, d. h. wenn die Messung auf der oberen Seite einer waagerechten Fläche erfolgen soll, wird die Meßvorrichtung auf die Funktionsfläche 100 aufgedrückt. Danach wird die Spannschraube 51 durch Drehen des Kopfes 510 in die Aufhängung 24 des Tubus 2 eingeschraubt. Dadurch wird die Zusammensetzung der beiden Rohre 21 und 22 mit der Zugfeder 5, dem Schwenkmechanismus 3 und dem Haltemagnet 4 in der Pfeilrichtung I gemäß Fig. 1 so lange verschoben, bis die Frontfläche 40 des Haltemagnets 4 die Funktionsfläche 100 berührt und die notwendige Verbindung sicherstellt. Danach wird die Spannschraube 51 mittels des Betätigungsdrehknopfes 52 in umgekehrte Richtung gedreht. Der Kopf 510 der Spannschraube 51 wird in der Kammer 213 des oberen Zylinders 21 durchgedreht, der sich vom unteren Zylinder 22 entfernt. Zugleich wird dadurch die Zugfeder 5 so lange gespannt, bis die Lage des Mechanismus gemäß Fig. 2 erreicht ist, in welcher die Zugfeder maximal gespannt ist bei gleichzeitiger Verbindung des Haltemagnets 4 mit der Funktionsfläche 100.

Die maximale Zugkraft der Zugfeder 5 wird so gewählt, daß sie mit einem Sicherheitskoeffizient die Anziehungskraft des Haltemagnets 4 nicht übersteigt. Diese Anziehungskraft wird um das Gewicht des Meßgerätes vergrößert. Jetzt kann der Hilfsandruck aufgehoben werden und durch Längenverstellung der Abstützelemente 60 kann die benötigte Lage des Meßgeräts eingestellt oder die verlangte Einstellung oder Messung realisiert werden. Kleine Veränderungen der Basislage 10 und somit auch des Tragkörpers 1 ohne Beeinflussung der Einspannung werden durch Einwirkung der konstanten Kraft der Zugfeder 5 ermöglicht, deren Zugkraft durch die kleinen Veränderungen ihrer Länge als Folge kleiner Veränderungen der Abstützelemente 60 wesentlich nicht verändert wird.

Nach Beendigung der Arbeit genügt es, die Stellschraube 41 durch Drehen ihres Kopfes 42 im Haltemagnet 4 so weit herauszuschrauben, daß die Frontfläche 40 des Haltemagnets 4 von der Funktionsfläche 100 abgehoben wird. Nach dem Abheben zieht sich die Zugfeder auf ihre ursprüngliche Länge zusammen und das System nimmt wieder die in der Fig. 1 dargestellte Ausgangslage ein.

Die magnetische Spanneinrichtung kann vorteilhaft bei der Einstellung und genauen Positionierung von großen rotierenden Bauteilen und Werkstücken vor ihrer Bearbeitung bzw. Vermessung eingesetzt werden. Besondere Vorteile bringt ihre Anwendung bei Meßvorrichtungen zur Bestimmung der Achsen von Turbogehäusen, Kompressoren und Getriebekästen.

### Verzeichnis der Bezugszeichen

1 Tragkörper
10 Basis
11 Spannschraube
12 Lasche
100 Bezugsfläche
2 Tubus
21 Oberes Rohr
210 Obere Aufhängung
211 Stirnseite
212 Endplatte
213 Kammer
22 Unteres Rohr
220 Untere Aufhängung
221 Untere Stirnseite
222 Bodenplatte
24 Verschluß
3 Schwenkmechanismus
30 Obere Brücke
31 Untere Brücke
32 Bolzen
4 Haftmagnet
40 Frontfläche
41 Gewindebolzen
42 Kopf
43 Stirn
5 Zugfeder
50 Spannmechanismus
51 Spannschraube

510 Kopf
52 Betätigungsdrehknopf
6 Stellmechanismus
60 Stützstreben
7 Arm

Drehkopf (42) angeordnet ist.

## Ansprüche

1. Magnetische Spannvorrichtung zur lagegenauen Positionierung eines Maschinenelements, insbesondere eines Meßgeräts, gegenüber einer Bezugsfläche, bestehend aus einer Traghalterung für zumindest einen Bauteil des Maschinenelements, einem Haftmagneten und mindestens einem mechanischen Stellglied,
**dadurch gekennzeichnet,**
daß die Tragkonstruktion einen über längenverstellbare Stützstreben (60) auf der Bezugsfläche (100) abgestützten Tragkörper (1) aufweist, und
daß der über ein Schwenklager (30, 31, 32) und eine längsgeführte Zugfeder (5) am Tragkörper (1) gehalterte Haftmagnet (4) mittels einer Verstellvorrichtung (50) aus einer abgehobenen Ruhelage in eine auf der Bezugsfläche (100) aufliegende Haftstellung bewegbar ist.

2. Spannvorrichtung nach Anspruch 1,
dadurch gekennzeichnet,
daß die Zugfeder (6) von zwei gleichachsigen längsgeführten Rohren (21, 22) umgeben ist, von denen das obere Rohr (21) mit der Verstellvorrichtung (50) zur Längsbewegung der Zugfeder (5) und das untere Rohr (22) mit dem Schwenklager (30, 31, 32) verbunden ist.

3. Spannvorrichtung nach Anspruch 2,
dadurch gekennzeichnet,
daß die beiden Rohre (21, 22) in einer am Tragkörper (1) befestigten Führung (2) angeordnet sind.

4. Spannvorrichtung nach einem der Ansprüche 1 bis 3,
dadurch gekennzeichnet,
daß das Schwenklager mindestens zwei bügelförmige Brücken (30, 31) enthält, die über Zapfen (32) miteinander schwenkbar verbunden sind.

5. Spannvorrichtung nach einem der Ansprüche 1 bis 4,
dadurch gekennzeichnet,
daß an der Endplatte (212) des oberen Rohrs (21) ein das obere Ende der Zugfeder (5) halternder Kopf (210) festgelegt ist, der mit einer Stellschraube (51) des Verstellmechanismus (50) verbunden ist.

6. Spannvorrichtung nach einem der Ansprüche 1 bis 5,
dadurch gekennzeichnet,
daß im Haftmagneten (4) ein gegen die Bezugsfläche (100) ausschraubbarer Gewindebolzen (41) mit einem zwischen den Brücken (30, 31) befindlichen

FIG.1

## FIG. 2